# EUROPEAN PATENT APPLICATION

(11) **EP 1 307 062 A1**
(43) Date of publication of application: **02.05.2003**
(21) Application number: 01309010.5
(22) Date of filing: 24.10.2001
(51) Int. Cl.: H04Q 7/32, H04N 5/445

(54) **User interface for transmitting video data from a mobile device to an external display**

(71) Applicant: Nokia Corporation, 03260 Espoo (FI)
(72) Inventor: Halme, Jouni Juhani, 8767 Pasco de Roxas, 1226 Makati City (PH)
(74) Representative: Ruuskanen, Juha-Pekka

(57) **Abstract**

A user interface for a mobile user equipment (1) is provided by means of an external display device (10). A communication interface (14,15) is provided between the mobile user equipment (1) and the external display device (10). Video signal generation means (18) are provided for generation of a video signal based on which the external device can produce a graphical user interface for the mobile user equipment (1), said video signal being generated based on a signal generated by the mobile user equipment (1).

## Description

The present invention relates to provision of a user interface, and in particular to provision of a user interface for a portable or mobile user equipment.

Portable user equipment such as mobile telephone terminals and other mobile stations have become increasingly popular. A mobile station comprises communication means for enabling communication over a wireless interface with other cooperative stations such as a base station of a cellular communication system or other mobile stations.

A mobile station is typically provided with user interface means for enabling the user thereof to interact with the device. The user interface typically comprises means for input information from the user and for output of information to the user. To provide this means such as input keys, scrolling buttons and/or voice recognition means and a graphical user interface may be provided.

The graphical user interface is typically provided by means of a display on the portable user equipment. The display can be used for displaying various information to the user such as telephone numbers, names and so on. The display may also form a part of the input means, as a menu or similar can be displayed to the user whereby the user may then select an option from the display. The menu can be used e.g. to control the operation of the mobile station. Modern mobile stations may also use the display for displaying content such as text messages, images and other multimedia content and so on. The content may have been received via the wireless interface.

A portable user equipment such as a mobile station can only be provided with the relatively small display. The size of the display may hinder the use of the mobile station for tasks such as web browsing or downloading of data content from a data network. Display of e.g. web pages or other images with substantially high amount of various features and/or data content is believed to be an especially challenging task for the relatively small displays. The users of the portable equipment may also otherwise feel that the display as difficult to use, and might prefer a larger display screen. For example, user with eye sight problems might find a bigger display helpful. Furthermore, several persons may wish to view the display at the same time.

Embodiments of the present invention aim to address one or several of the above problems and to provide a graphical user interface that is larger than the conventional displays of portable user equipment such as mobile stations.

According to one aspect of the present invention, there is provided an arrangement for provision of a user interface for a mobile user equipment, the arrangement comprising: an external display device; video signal generation means; and a communication interface between the mobile user equipment (1) and the external display device, the arrangement being such that a graphical user interface is provided for the mobile user equipment by the external display device based on a video signal generated by the video signal generation means based on a signal generated by the mobile user equipment.

According to another aspect of the present invention there is provided an adapter comprising video signal generation means for generating a video signal based on a signal received from a mobile user equipment, and connector means for connecting to an input interface of an external display device, whereby a graphical user interface is provided for the mobile user equipment by the external display device based on the video signal from the adapter.

According to another aspect of the present invention there is provided a method of providing a user interface for a user of a mobile user equipment, the method comprising: communication of information associated with the user interface from the mobile user equipment to an external display device; generation of a video signal based on information associated with the user interface; and displaying a graphical user interface by means of the external display device based on the generated video signal.

The video signal generation means may be provided in association with the communication interface. The video signal generation means may be connected to an input interface of the external display device. According to an alternative, the video signal generation means is provided at the mobile user equipment.

The communication interface may comprise a cable arranged to be connectable with an input interface of the external display device. At least a part of communication may occur via a wireless interface. The wireless interface may comprise a short range communication link.

The video signal generation means, the connector element of the communication, the connector means, means for receiving signals from the mobile station are provided in a single element.

The user interface may be displayed simultaneously by the external display device and a display of the user equipment.

The embodiments may provide a graphical user interface for a mobile user equipment that may be larger than the display provided on the mobile user equipment itself. The larger graphical user interface may improve substantially the legibility of a menu, text, pictures, video images and/or other multimedia content the user or a group of users may wish to view. A user may make use of all types of external display devices such as per se standard television apparatus, computer screens or wide screen television projectors. An external display device may be used anywhere. For example, a user may use an external display device in places such as homes or offices or in public places such as hotels, airports and so on.

For better understanding of the present invention, reference will now be made by way of example to the accompanying drawings in which:
Figure 1 shows an embodiment of the present invention;
Figure 2 shows an adapter for the Figure 1 embodiment;
Figure 3 shows another embodiment of the present invention; and
Figure 4 shows an adapter for the Figure 3 embodiment; and
Figure 5 is a flowchart illustrating the operation in accordance with an embodiment of the present invention.

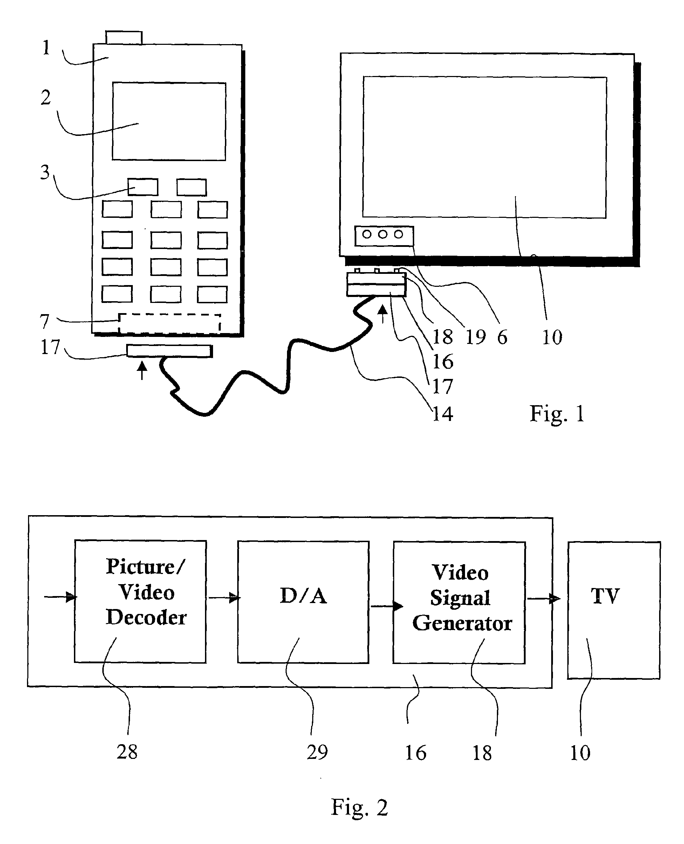

Reference is first made to Figure 1 showing a handheld mobile user equipment 1. More particularly, the user equipment 1 comprises a mobile station arranged for communication via a cellular communication system. The mobile station 1 communicates over a wireless interface with transceiver elements of the communication system. Since the transceiver elements or other elements of a cellular communication system do not form an essential part of this invention these are not shown in the drawings for clarity reasons.

The skilled person is aware of the overall operation of a mobile station and the necessary components thereof. Therefore these are not described herein in any more detail. It is sufficient to note that a mobile station typically comprises means for processing data and/or controlling the operation thereof (e.g. a central processor unit), means for storing data and means for receiving and transmitting radio signals.

The mobile station 1 is shown to comprise user interface means comprising a graphical user interface in the form of a display 2 and input means in the form of control buttons 3. The display 2 provides the graphical user interface of the mobile station 1. It shall be appreciated that the user equipment may be provided with further or alternative user interface means, such as voice recognition means, voice output means, touch screen means and so on. Furthermore, it is noted that the integrated display 2 or the control buttons 3 are not necessary in all applications.

The display 2 can be used for displaying text messages, control menus, and any other graphical information for the user of the mobile station as the case may be. In addition, the mobile station 1 may be arranged to receive data content from the communication system. For example, the user may download multimedia content from a server provided in the communication system. An image may then be displayed based on the received data content on the display 2 of the mobile station 1.

In an embodiment an external display device such as a standard television apparatus 10 is used for provision of a larger graphical user interface. The viewing experience will be substantially improved since the screen of the television apparatus 10 is typically much bigger than the relatively small display 2 of the mobile station 1. The inventor believes this to be the case especially when viewing multimedia content. It shall be appreciated that the drawings are not in scale, and that in practice the screen of the television apparatus 10 will in most instances be substantially larger that the display screen 2 of the mobile station 1.

The following will describe in more detail two examples how to provide an enlarged user interface for a user of a mobile user equipment by means of an external display device.

In the Figure 1 embodiment a mobile station 1 is connected to a television apparatus 10 by means of a cable 14. The first end of the cable 14 is provided with a connector 17 for connecting with a compatible connector element 7 provided at the mobile station 1. The second end of the cable 14 is provided with a connector element 16. The connector element 16 comprises connector means 19 that are compatible with input interface means 6 of the TV apparatus 10 thereby enabling a direct connection between the elements.

Figure 2 shows a block diagram for a possible connector or adapter element 16. The element 16 is shown to comprise a video signal generator 18. The video signal generator 18 is for conversion of signals coming from the mobile station 1 into a format that can be presented by the television apparatus 10. Other possible components of the connector element 16 include a picture to video decoder 28 for decoding of signals from the mobile station, and a digital to analogue (D/A) converter 29 for conversion of digital signals into analogue form for processing by the video signal generator 18.

The input interface means 6 of the TV apparatus 10 preferably comprise an Audio-Video (AV) interface. Since input means such as the Audio-Video input-output interface is typically provided in the front panel of the TV apparatus, the input interface is readily accessible by the users. The Audio-Video (AV) interface of the TV apparatus 10 may comprise e.g. a standard three pin (Red, Yellow, White) connector or any other standard connection element.

The connector element 16 of Figure 1 is shown to consist of a first and a second portion or component 17 and 18, respectively. More particularly, the first portion 17 may be a standard connector. The second portion is connected to the first portion and comprises the video signal generator 18, possible converter means and connector means 19 for connection to the input interface means 6. The arrangement may thus be such that the video signal generator 18 is connected to the second end of the cable 14 by connecting it to the connector element 17. The video signal generator 18 is then plugged (as shown by the arrow) into the input interface means 6 of the television apparatus 10.

By the provision of video signal generator 18 in association with the cable 14, and more particularly by connecting it to the end of the cable 14 by means of the standard connector 17 it is possible to provide a communication interface between the mobile station 1 and the TV apparatus 10 that does not necessarily need any modifications to either of the devices or existing cables. Instead, standardised cables and connectors may be used for the provision of communication media between the mobile station 1 and the television apparatus 10.

In addition to the video signal generator (VSG) 18 and the other components shown in Figure 2, the connector element 16 may also include means such as a power supply to the video signal generator (not shown for clarity). The power supply may be a dedicated battery. Power may also be supplied from the mobile via the cable. In some applications the connector element 16 may need to be provided with some electronic circuitry, e.g. if special control functions are required.

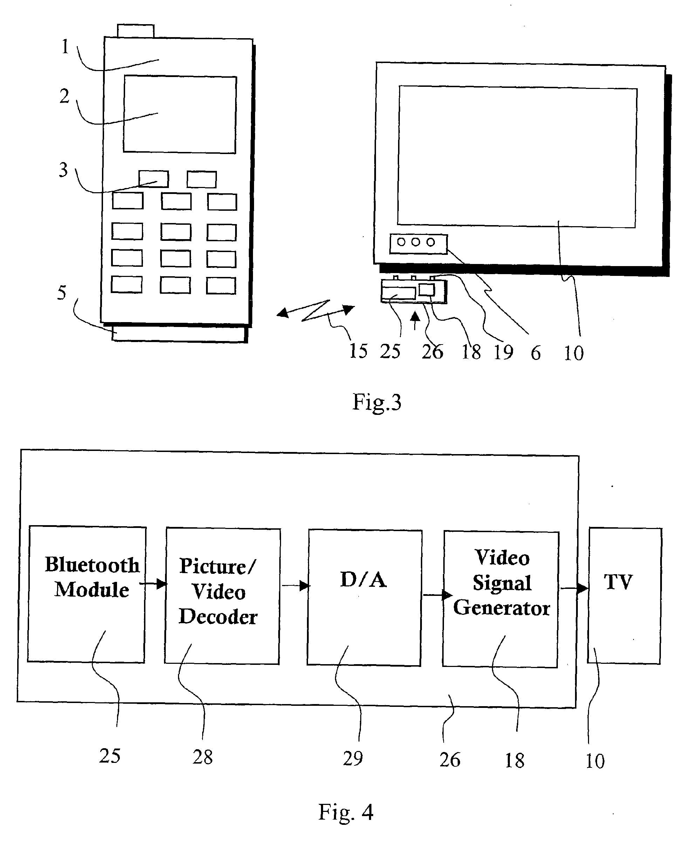

Figure 3 shown another embodiment wherein a wireless interface 15 is provided between a mobile station 1 and a television apparatus 10. The wireless communication interface between the mobile station 1 and the TV apparatus 10 is shown to be provided by means of a communication module 5 of the mobile station 1 and a connector element 26. The connector element 26 may be connected to the Audio-Video (AV) interface 6 of the TV apparatus 10 by means of the connecting pins 19.

The wireless interface may comprise any of the so called short range links or low power local links. An example of the short range links is the Bluetooth™. Bluetooth™ refers to a technology specification by Bluetooth special interest group (SIG) for small factor, low-cost, short range links between various devices provided with Bluetooth™ wireless modules. The wireless link between the mobile station 1 and the television apparatus may also be based on other solutions such as wireless local area network (WLAN).

In Figures 3 and 4 the connector element 26 is provided with a Bluetooth™ communication module 25. A second Bluetooth™ communication module 5 is provided at the mobile station 1.

As shown in more detail by Figure 4, the connector element 26 comprises also a video signal generator 18. As in Figure 2, other components may also be provided, and thus the connector element 16 is shown to include a picture to video decoder 28 for decoding of signals from the mobile station, and a digital to analogue (D/A) converter 29 for conversion of digital signals to analogue signals.

Thus a single connector element 26 may comprise all means that are needed for the provision of a single adapter device adapted for wireless communication with the mobile station 1. The user may easily carry with him/her a single adapter comprising e.g. the Bluetooth™ chip 25, a video signal generator 18, a power source such as a battery or any other electronic circuitry and connector means for connection to the AV interface of the TV apparatus. The required components may be integrated in a substantially small and cheap device.

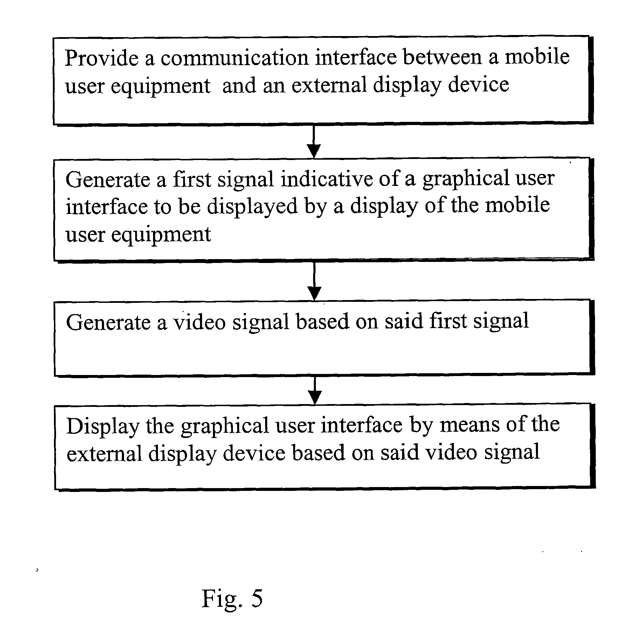

The principles of operation in accordance with the embodiments illustrated in Figure 1 and 3 is illustrated by the flowchart of Figure 5.

It shall be appreciated that instead of external modules, such as those shown in Figure 3, the mobile station 1 and/or the television apparatus 10 may be provided either with an integrated short range link communication module (e.g. a Bluetooth™ chip).

It shall be appreciated that in the Figure 1 example a single adapter element 16 may be formed by a combination of elements 17 and 18.

In the above examples the video signal generator is described as being an auxiliary device that is connected to an interface of the television apparatus. However, the video signal generator and other possible components of the adapter element may also be built-in into a TV apparatus. In this form the TV apparatus generates internally the video signal from a signal received from the mobile station via a connection between them.

A video signal generator may also be provided in association with or as an integrated function of a mobile station. In this case the video signal will then be signalled via the interface between the mobile station and the television apparatus.

The TV screen of the television apparatus may be employed to display the user interface of the mobile station 1 as a parallel display, that is simultaneously with the display on the actual display 2 of the mobile station 1 itself. This may be advantageous in some instances. For example, the user may give control instructions by looking first a menu displayed at the larger TV screen 10, make then his mind regarding a selection he should do, and then point the selected option from the menu by moving a pointer element on the display 2 of the mobile station 1. It may be easier for the user to look at the same time his fingers and the display at the time of pointing the selection. Furthermore, a user may find it easier to control presentations given to a group of viewers if he/she is able to view the display of the mobile station at the same time.

The mobile station may be provided with an integrated camera, camcorder or the mobile station may be provided with a connection to such an image capturing / generating device. The modern mobile station may also be provided with a substantially large memory capacity or external swappable memory (e.g. MMC, SD or a memory stick) for storing the image data in the mobile station. The embodiments enable playback of the still pictures and videos for example while visiting friends, or giving a presentation e.g. in a seminar. The user does not necessarily need to carry a Camcorder or a Digital camera to show those pictures. Instead, a substantially small "accessory" as described above is needed to provide a connection into a TV apparatus.

In addition to TV apparatus, any other display device providing external display for a mobile user equipment can be used herein. For example, a specific display device or a display of a personal computer, a wide-screen television projector, or a modern overhead projector capable of displaying images based on a video signal can be used in the embodiments.

The mobile user equipment may be adapted for communication based on any communication system. Examples of these include the GSM (Global System for Mobile communication), EDGE (enhanced data rate for GSM evolution), or the GPRS (General Packet Radio Service), or any of the so called third generation (3G) wireless communication systems, such as the UMTS (Universal Mobile Telecommunications System), IMT 2000 or i-phone and so on.

It shall also be appreciated that whilst embodiments of the present invention have been described in relation to mobile stations, embodiments of the present invention are applicable to any other suitable type of user equipment.

The embodiments enable use of any standard display apparatus provided with an input interface for receiving a signal from a user equipment. The above described embodiments provide a user of e.g. a mobile station with a larger display such as a TV screen. The external display apparatus can be used as a dummy display in provision of an improved graphical user interface. The users may find it easy to use the above described embodiments. The embodiments are also believed to be reasonably cheap to implement. The inventor believes that especially in the future data communication applications wherein more and more content such as multimedia content will be downloaded by the users the users will appreciate the enhanced end user experience and easiness of use. For example, a user may have a personal picture gallery saved in a Picture Server provided in a data network. The user may then download or browse some more pictures over the wireless connection between the mobile station and the data network and show those pictures in a TV screen.

It is also noted herein that while the above describes exemplifying embodiments of the invention, there are several variations and modifications which may be made to the disclosed solution without departing from the scope of the present invention as defined in the appended claims.

## Claims

1. A arrangement for provision of a user interface for a mobile user equipment (1) comprising:
an external display device (10);
video signal generation means (18); and
a communication interface (14,15) between the mobile user equipment (1) and the external display device (10),
the arrangement being such that a graphical user interface is provided for the mobile user equipment (1) by the external display device (10) based on a video signal generated by the video signal generation means (18) based on a signal generated by the mobile user equipment (1).

2. A arrangement as claimed in claim 1, wherein the video signal generation means (18) is provided in association with the communication interface (14,15).

3. An arrangement as claimed in claim 1 or 2, wherein the video signal generation means (18) is connected to an input interface (6) of the external display device (10).

4. An arrangement as claimed in claim 1, wherein the video signal generation means is provided at the mobile user equipment (1).

5. An arrangement as claimed in any preceding claim, wherein the communication interface comprises a cable (14) that is arranged to be connectable with an input interface (6) of the external display device (10).

6. An arrangement as claimed in any of claim 1 to 4, wherein the communication interface comprises a wireless interface (15).

7. An arrangement as claimed in claim 6, wherein the wireless interface comprises a short range communication link (15), the mobile user equipment (1) and the external display device being provided with means (5,25) for provision of communication via the short range radio communication link.

8. An arrangement as claimed in any of claim 1 to 3 or 5 to 7, wherein the video signal generation means (18) and a connector element (19) of the communication interface (14,15) for connection to an input interface (6) of the external display device (10) are provided in a single element (16,26).

9. An arrangement as claimed in claims 7 and 8, wherein the said single element (26) comprises means for communication via the wireless interface (15).

10. A arrangement as claimed in any preceding claim, wherein the user interface is arranged to be displayed simultaneously by the external display device (10) and a display (2) of the user equipment (1).

11. A arrangement as claimed in any preceding claim, wherein the external display device (10) comprises one of: a television apparatus; a computer display screen; a wide screen projector; or an overhead projector.

12. An adapter comprising:
video signal generation means (18) for generating a video signal based on a signal received from a mobile user equipment (1); and
connector means (19) for connecting to an input interface (6) of an external display device (10), whereby a graphical user interface is provided for the mobile user equipment (1) by the external display device (10) based on the video signal from the adapter (16,26).

13. An adapter as claimed in claim 12, comprising a communication means (25) for receiving a signal transmitted from the mobile user equipment (1) over a wireless interface (15).

14. An adapter as claimed in claim 12 or 13, being arranged to be directly connectable to an audio-video interface (6) of the external display device (10).

15. An adapter as claimed in any of claims 12 to 14, comprising the video signal generator means (18), the connector means (19), means for receiving signals from the mobile station and a power source in a single element (16,26).

16. A method of providing a user interface for a user of a mobile user equipment (1), the method comprising:
communication of information associated with the user interface from the mobile user equipment (1) to an external display device (10);
generation of a video signal based on information associated with the user interface; and
displaying a graphical user interface by means of the external display device (10) based on the generated video signal.

17. A method as claimed in claim 16, wherein the video signal is generated in an adapter (16,26) connected to an input interface (6) of the external display device (10).
